Europäisches Patentamt

European Patent Office

Office européen des brevets

(11) Publication number: **0 251 550 B1**

# EUROPEAN PATENT SPECIFICATION

(45) Date of publication of patent specification: **04.09.91**   (51) Int. Cl.⁵: **C09K 11/80, H01J 61/44**

(21) Application number: **87305314.4**

(22) Date of filing: **16.06.87**

The file contains technical information submitted after the application was filed and not included in this specification

(54) **Improvements in or relating to inorganic phosphors.**

(30) Priority: **21.06.86 GB 8615202**

(43) Date of publication of application:
**07.01.88 Bulletin 88/01**

(45) Publication of the grant of the patent:
**04.09.91 Bulletin 91/36**

(84) Designated Contracting States:
**DE FR GB IT NL**

(56) References cited:
**GB-A- 2 047 262**
**GB-A- 2 053 953**

(73) Proprietor: **THORN EMI plc**
**THORN EMI House Upper Saint Martin's Lane**
**London, WC2H 9ED(GB)**

(72) Inventor: **Fuller, Martin John**
**81, Daryngton Drive**
**Greenford Middlesex, UB6 8BH(GB)**

(74) Representative: **Sanders, Peter Colin Christopher et al**
**BROOKES & MARTIN High Holborn House**
**52/54 High Holborn**
**London WC1V 6SE(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

This invention relates to inorganic phosphors.

Patent No. GB 1 191 014 (Thorn Lighting Limited) describes a luminescent cerium aluminate which has a composition $Ce_2O_3.nAl_2O_3$ where n has a value between 8 and 13. This aluminate has a hexagonal crystal structure which corresponds to the structure of $\beta$-alumina. Such an aluminate can be excited by U.V. radiation to give a bright blue emission.

Patent No. GB 1 393 040 describes luminescent materials of a hexagonal crystal structure which corresponds to that of $\beta$-alumina and which contain trivalent cerium and aluminium but which also contain terbium as an activator. The highest luminous fluxes were obtained by incorporating terbium into the cerium aluminate composition to give a composition defined by the formula:

$$(Ce_{(1-y)}Tb_y)_2O_3.nAl_2O_3$$

in which n is between 8 and 13 and y is between 0.001 and 0.30. The presence of terbium suppresses the blue luminescence and gives the characteristic terbium emission which comprises a very narrow peak at about 544nm together with several weaker emissions.

It is an object of the invention to provide phosphors which have a different spectral energy distribution from or higher luminous fluxes than those of known cerium aluminate phosphors and which we consider to be more desirable for certain applications.

According to the invention there is provided a phosphor comprising an aluminate of trivalent cerium and at least one of the alkaline earth metal cations calcium, strontium and barium and optionally one or both of the rare earth activators terbium and dysprosium, the terbium and dysprosium being in the trivalent state, said phosphor having a hexagonal crystal structure which corresponds to that of -alumina and having a composition represented by the formula:.

$$\tfrac{1-y-z}{3} Ce_2O_3.vTb_2O_3.wDy_2O_3.aCaO.bSrO.cBaO.nAl_2O_3$$

where $y = v + w$,
$z = a + b + c$,
$8 \leq n \leq 14$,
$0.00 \leq v \leq 0.25$,
$0.00 \leq w \leq 0.05$, and
$0.01 \leq Z \leq 1.20$.

n preferably has a value from 10 to 13. z is preferably from 0.20 to 0.80 when calcium or strontium are present (and $c = 0$) and preferably between 0.10 and 0.40 when barium is present (and $a = 0$ and $b = 0$).

The phosphors preferably include terbium and/or dysprosium.

It has been shown by X-ray diffraction analysis that when $a = 0$ and $b = 0$, increasing amounts of a second crystal phase in addition to the desired $\beta$-alumina phase are present as the value of z (= c in this case) increases above about 0.4.

The phosphors of the present invention incorporate at least one of the alkaline earth metal cations $Ca^{2+}$, $Sr^{2+}$ or $Ba^{2+}$ into cerium aluminates, whilst maintaining the hexagonal crystal structure which corresponds to that of $\beta$-alumina. These phosphors can have advantages over materials which do not contain calcium, strontium or barium. For example the blue emitting phosphors according to the present invention (which do not contain terbium or dysprosium) have a different spectral energy distribution from known cerium aluminate phosphors. It has also been found that the addition of at least one of the alkaline earth metal cations $ca^{2+}$, $Sr^{2+}$ or $Ba^{2+}$ in accordance with the invention to known cerium aluminate phosphors containing Tb produces green emitting phosphors with a similar spectral energy distribution but higher luminous fluxes.

When either or both of the rare earth activators terbium and dysprosium are included, they should be in the trivalent state.

It is well known that there are aluminate compounds which have a crystal structure corresponding to that of $\beta$-alumina but which may differ one from another in the d-values (which are measures of separations of various layers of ions within the crystal). The d-values (in $10^{-10}$m) and the intensities (I in %) of the most prominent X-ray diffraction lines as measured for a typical material according to the present invention and having the desired $\beta$-alumina crystalline phase are shown in Table 1.

## Table 1

| $d$ $(10^{-10}m)$ | $I(\%)$ | $d$ $(10^{-10}m)$ | $I(\%)$ |
|---|---|---|---|
| 4.715 | 30 | 2.201 | 25 |
| 4.396 | 15 | 2.118 | 65 |
| 3.633 | 25 | 2.014 | 40 |
| 3.619 | 10 | 1.715 | 15 |
| 2.780 | 50 | 1.575 | 30 |
| 2.747 | 20 | 1.572 | 25 |
| 2.694 | 15 | 1.538 | 50 |
| 2.637 | 100 | 1.390 | 35 |
| 2.481 | 85 | 1.387 | 20 |
| 2.290 | 30 | 1.316 | 15 |

The phosphors according to the invention may be excited by ultra-violet radiation in the wavelength region 220nm to 380nm. They can be employed either alone or in combination with other phosphors in luminescent screens used for converting ultra-violet radiation to visible light. An application of such a luminescent screen is found in low-pressure mercury vapour discharge lamps. Such a screen may also be used in low-pressure cadmium vapour discharge lamps because the screen is efficiently excited by the 230nm to 330nm radiation produced by such a discharge. Some of the phosphors according to the invention have a luminous flux which does not decrease significantly with temperature at temperatures up to at least 300°C. For example, the luminous flux of the terbium emission from those materials activated with terbium decreases by less than one quarter when measured at 300°C compared with that measured at 20°C.

The phosphors according to the invention can also be excited by electrons and by X-rays. When so excited they provide substantially the same emission as when excited by ultra-violet radiation.

Phosphors according to the invention may be incorporated, either alone, or in combination with other phosphors, by firing, into certain fusible inorganic mixtures, thereby rendering the fused mixture, after cooling, luminescent when exposed to suitable exciting radiation. For example a porcelain may be made to luminesce when exposed to long-wave ultra-violet radiation.

The phosphors according to the invention may be prepared by method which are generally known, for example by heating a mixture of the constituent oxides, or compounds which on heating yield the constituent oxides, in a reducing or inert atmosphere at 1400 to 1700°C. Incorporating a suitable fluorine containing compound in the mixture facilitates formation of the desired hexagonal phase. Examples of suitable compounds are fluorides of aluminium, cerium, terbium, dysprosium or of the alkaline earth metals calcium, strontium or barium. The fluorine is evolved as a fluoride compound during heating and fluorine is not therefore present to any significant extent in the final material.

In order that the invention may be clearly understood and readily carried into effect, it will be described by way of example, with reference to the accompanying drawings, of which:

Figure 1 shows the spectral energy distribution curves of a calcium containing phosphor and a strontium containing phosphor according to the invention, and also of a known cerium aluminate phosphor,

Figure 2 shows the spectral energy distribution curve of a phosphor according to the invention containing dysprosium and calcium, and

Figure 3 shows the spectral energy distribution curve of a phosphor according to the invention containing strontium, terbium and dysprosium.

The invention is illustrated by, but in no way limited to, the following examples:

Example 1

| | |
|---|---|
| $Al(OH)_3$ | 92.70g |
| $CeO_2$ | 13.20g |
| $CaCO_3$ | 1.99g |
| $CaF_2$ | 0.98g |

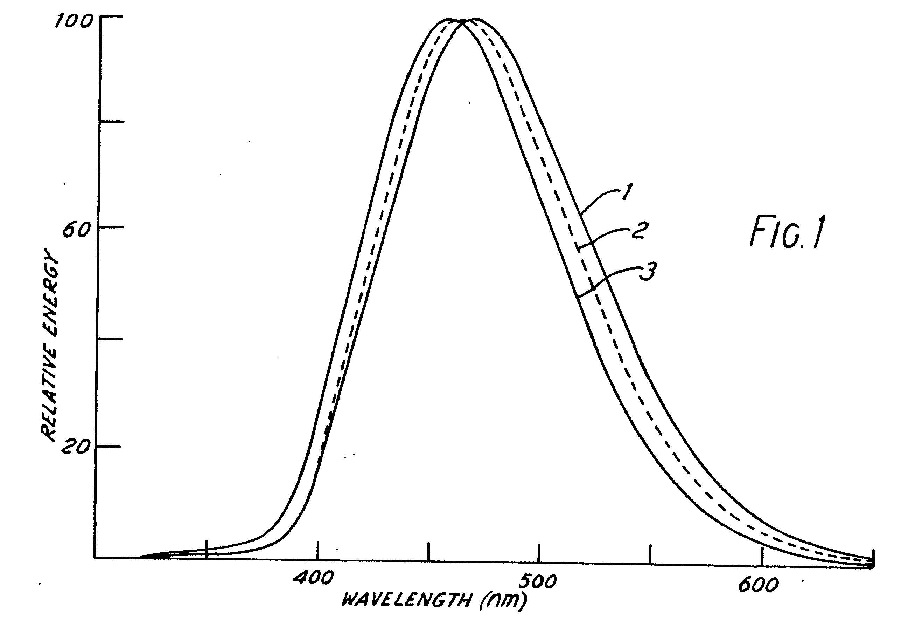

The above constituents were intimately blended and heated in a reducing atmosphere comprising 75% hydrogen and 25% nitrogen at 1580°C for 8 hours. After cooling in the reducing atmosphere, grinding and sieving, the product was ready for use. The luminescent material obtained by this method has a composition defined by the formula $0.78Ce_2O_3. 0.66CaO.12Al_2O_3$. When irradiated with ultra-violet radiation in the wavelength region 220nm to 380nm this phosphor gave a bright blue emission. Referring to Figure 1, Curve 1 shows the spectral energy distribution of the emission from this phosphor when used in a fluorescent lamp containing a low-pressure mercury discharge.

Example 2

| | |
|---|---|
| $Al(OH)_3$ | 92.70g |
| $CeO_2$ | 13.20g |
| $SrCO_3$ | 2.94g |
| $SrF_2$ | 1.57g |

These constituents were blended, heated, ground and sieved in the same manner as for Example 1, to yield a phosphor having a composition defined by the formula $0.78Ce_2O_3.0.66SrO.12Al_2O_3$. Curve 2 in Figure 1 represents the spectral energy distribution of the emission from this phosphor when used in a fluorescent lamp.

For the purposes of comparison, Curve 3 in Figure 1 shows the spectral energy distribution in a fluorescent lamp of a known phosphor, containing no added alkaline earth cations, of composition defined by the formula $Ce_2O_3.12Al_2O_3$. This was prepared in a manner analogous to that of Examples 1 and 2. It is apparent that the emissions of the materials containing the alkaline earth cations are shifted to longer wavelengths compared with the emission of the known material containing no added alkaline earth cation. This wavelength shift is beneficial in certain applications.

Example 3

| | |
|---|---|
| $Al(OH)_3$ | 92.70g |
| $CeO_2$ | 13.20g |
| $CaF_2$ | 1.07g |
| $SrCO_3$ | 2.03g |
| $BaCO_3$ | 0.97g |

These constituents were blended, heated, ground and sieved in the same manner as in Example 1 to yield a phosphor with a composition defined by the formula $0.78Ce_2O_3.0.28CaO.0.28SrO. 0.10BaO.12Al_2O_3$.

4

When irradiated with ultra-violet radiation in the wavelength region 220nm to 380nm, this phosphor gave a blue emission.

Example 4

$$Al(OH)_3 \qquad 92.70g$$
$$CeO_2 \qquad 12.38g$$
$$TbF_3 \qquad 2.16g$$
$$CaCO_3 \qquad 2.70g$$

These constituents were blended, heated, ground and sieved in the same manner as in Example 1 to yield a phosphor with a composition defined by the formula

$0.72Ce_2O_3.0.10Tb_2O_3.0.54CaO.11.8Al_2O_3$.

When irradiated with ultra-violet radiation in the wavelength region 220nm to 380nm, this phosphor gave the green emission characteristic of terbium, which comprises very narrow peaks at between 535nm and 560nm together with several weaker emissions.

Table 2 (below) lists the relative luminous fluxes of several phosphors according to the invention, prepared in a manner analogous to that of Example 4, which have compositions defined by the formula

$(0.90 - \frac{z}{3})Ce_2O_3.0.10Tb_2O_3.aCaO.bSrO.cBaO.11.8.Al_2O_3$.

These relative luminous fluxes were obtained after excitation by ultra-violet radiation of wavelengths between 250nm and 260nm. For the purpose of comparison, Table 2 also contains the relative luminous flux for the known composition containing no added calcium, strontium and barium ($z=0$) and prepared in a manner analogous to that of Example 4.

## Table 2

| a | b | c | Relative Luminous Flux |
|---|---|---|---|
| 0.54 | 0.00 | 0.00 | 106 |
| 0.00 | 0.54 | 0.00 | 106 |
| 0.27 | 0.27 | 0.00 | 105 |
| 0.00 | 0.00 | 0.30 | 102 |
| 0.00 | 0.00 | 0.00 | 100 |

Example 5

5

| $Al(OH)_3$ | 92.70g |
|---|---|
| $CeO_2$ | 13.10g |
| $CaCO_3$ | 2.02g |
| $CaF_2$ | 1.00g |
| $Dy_2O_3$ | 0.37g |

These constituents were blended, heated, ground and sieved in the same manner as Example 1 to yield a phosphor with a composition defined by the formula

$0.76Ce_2O_3.0.02Dy_2O_3.0.66CaO.11.8Al_2O_3$.

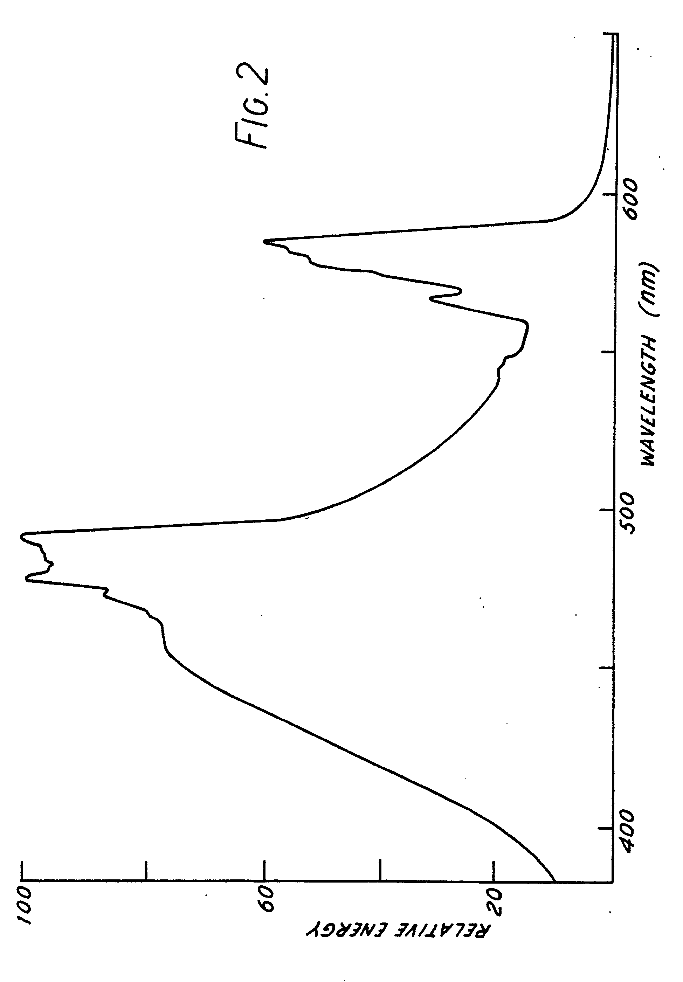

When irradiated with ultra-violet radiation in the wavelength region 220nm to 380nm the phosphor gave a bright whitish-blue emission. The incorporation of this amount of dysprosium reduces the intensity of the broad band blue emission to about half of that shown by Example 1 under the same conditions of ultra-violet excitation. The phosphor yields the characteristic dysprosium emission which comprises mainly two groups of narrow peaks in the wavelength regions 460nm to 500nm and 550nm to 600nm. Figure 2 shows the spectral energy distribution of a material prepared according to Example 5 and excited 254nm radiation.

Example 6

| $Al(OH)_3$ | 92.70g |
|---|---|
| $CeO_2$ | 12.92g |
| $SrCO_3$ | 3.45g |
| $SrF_2$ | 1.20g |
| $TbF_3$ | 0.43g |
| $Dy_2O_3$ | 0.19g |

These constituents were blended, heated, ground and sieved in the same manner as in Example 1 to yield a phosphor with a composition defined by the formula

$0.75Ce_2O_3.0.01Dy_2O_3.0.02Tb_2O_3.0.66SrO.11.8Al_2O_3$.

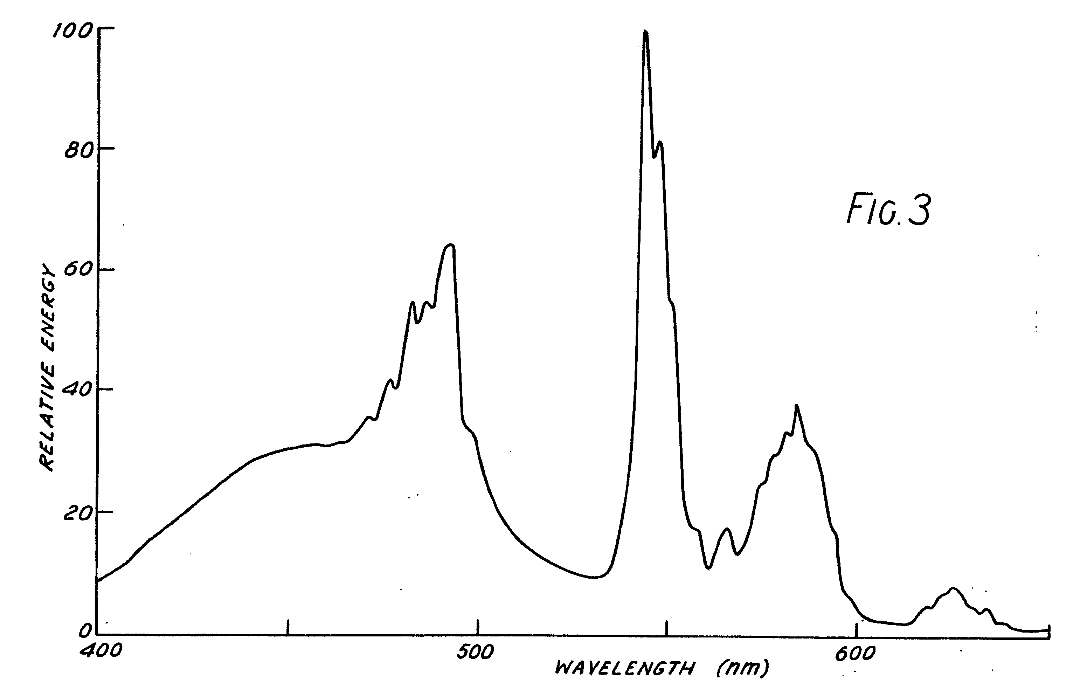

When irradiated with ultra-violet radiation in the wavelength region 220nm to 380nm the phosphor gave a bright whitish-blue emission. This emission comprises a mixture of three emissions, namely the broad band cerium emission similar to that of Example 2, the characteristic terbium emission similar to that of Example 4 and the characteristic dysprosium emission similar to that of Example 5. Figure 3 shows the spectral energy distribution of a material prepared according to Example 6 and excited by 254nm radiation.

**Claims**

1. A phosphor comprising an aluminate of trivalent cerium and at least one of the alkaline earth metal cations calcium, strontium and barium and optionally one or both of the rare earth activators terbium and dysprosium, the terbium and dysprosium being in the trivalent state, said phosphor having a hexagonal crystal structure which corresponds to that of $\beta$-alumina and having a composition represented by:

$(1-y-\frac{z}{3})Ce_2O_3.vTb_2O_3.wDy_2O_3.aCaO.bSrO.cBaO.nAl_2O_3$

where $y = v + w$,

$z = a + b + c$,

$8 \leq n \leq 14$,

$0.00 \leq v \leq 0.25$,

$0.00 \leq w \leq 0.05$, and

$0.01 \leq z \leq 1.20$.

2. A phosphor according to Claim 1 including terbium and/or dysprosium.

3. A phosphor according to Claim 1 or Claim 2 in which $10 \leq n \leq 13$.

4. A phosphor according to any one of Claims 1 to 3 in which $c = 0$.

5. A phosphor according to any one of Claims 1 to 3 in which $a = 0$ and $b = 0$.

6. A phosphor according to Claim 4 in which $0.20 \leq z \leq 0.80$.

7. A phosphor according to Claim 5 in which $0.10 \leq z \leq 0.40$.

8. A luminescent screen comprising a phosphor comprising an aluminate of trivalent cerium and at least one of the alkaline earth metal cations calcium, strontium and barium and optionally one or both of the rare earth activators terbium and dysprosium, the terbium and dysprosium being in the trivalent state, said phosphor having a hexagonal crystal structure which corresponds to that of $\beta$-alumina and having a composition represented by:

$(1-y-\frac{z}{3})Ce_2O_3.vTb_2O_3.wDy_2O_3.aCaO.bSrO.cBaO.nAl_2O_3$

where $y = v + w$,

$z = a + b + c$,

$8 \leq n \leq 14$,

$0.00 \leq v \leq 0.25$,

$0.00 \leq w \leq 0.05$, and

$0.01 \leq z \leq 1.20$.

9. A low-pressure mercury vapour discharge lamp having a luminescent screen as claimed in Claim 8.

10. A low-pressure cadmium vapour discharge lamp having a luminescent screen as claimed in Claim 8.

11. A method comprising incorporating by firing a phosphor comprising an aluminate of trivalent cerium and at least one of the alkaline earth metal cations calcium, strontium and barium and optionally one or both of the rare earth activators terbium and dysprosium, the terbium and dysprosium being in the trivalent state, said phosphor having a hexagonal crystal structure which corresponds to that of $\beta$-alumina and having a composition represented by:

$(1-y-\frac{z}{3})Ce_2O_3.vTb_2O_3.wDy_2O_3.aCaO.bSrO.cBaO.nAl_2O_3$

where $y = v + w$,

$z = a + b + c$,

$8 \leq n \leq 14$,

$0.00 \leq v \leq 0.25$,

$0.00 \leq w \leq 0.05$, and

$0.01 \leq z \leq 1.20$,

in a fusible inorganic mixture, thereby rendering the fused mixture, after cooling, luminescent when exposed to suitable exciting radiation.

**Revendications**

1. Matière luminescente comprenant un aluminate de cérium trivalent et au moins l'un des cations alcalino-terreux calcium, strontium et barium et éventuellement un des activateurs terres rares terbium et dysprosium, ou les deux, le terbium et le dysprosium étant à l'état trivalent, ladite matière luminescente ayant une structure cristalline hexagonale qui correspond à celle de la $\beta$-alumine et ayant une composition représentée par

$(1-y-\frac{z}{3})Ce_2O_3.vTb_2O_3.wDy_2O_3.aCaO.bSrO.cBaO.nAl_2O_3$

où $y = v + w$,
$z = a + b + c$,

$8 \leq n \leq 14$,
$0,00 \leq v \leq 0,25$,
$0,00 \leq w \leq 0,05$, et
$0,01 \leq Z \leq 1,20$.

2. Matière luminescente selon la revendication 1 incluant du terbium et/ou du dysprosium.

3. Matière luminescente selon la revendication 1 ou la revendication 2 dans laquelle $10 \leq n \leq 13$.

4. Matière luminescente selon l'une quelconque des revendication 1 à 3 dans laquelle $c = 0$.

5. Matière luminescente selon l'une quelconque des revendications 1 à 3 dans laquelle $a = 0$ et $b = 0$.

6. Matière luminescente selon la revendication 4 dans laquelle $0,20 \leq Z \leq 0,80$.

7. Matière luminescente selon la revendication 5 dans laquelle $0,10 \leq Z \leq 0,40$.

8. Ecran luminescent comprenant une matière luminescente incluant un aluminate de cérium trivalent et au moins l'un des cations de métaux alcalino-terreux calcium, strontium et barium et le cas échéant un des activateurs terres rares terbium et dysprosium, ou les deux, le terbium et le dysprosium étant à l'état trivalent, ladite matière luminescente ayant une structure cristalline hexagonale qui correspond à celle de la $\beta$-alumine et ayant une composition représentée par

$(1-y-\frac{z}{3})Ce_2O_3.vTb_2O_3.wDy_2O_3.aCaO.bSrO.cBaO.nAl_2O_3$

où $y = v + w$,
$z = a + b + c$,
$8 \leq n \leq 14$,
$0,00 \leq v \leq 0,25$,
$0,00 \leq w \leq 0,05$, et
$0,01 \leq z \leq 1,20$.

9. Lampe à décharge de vapeur de mercure basse pression ayant un écran luminescent tel que revendiqué dans la revendication 8.

10. Lampe à décharge de vapeur de cadmium basse pression ayant un écran luminescent tel que revendiqué dans la revendication 8.

11. Procédé comprenant l'incorporation par chauffage d'une matière luminescente comprenant un aluminate de cérium trivalent et au moins un des cations de métaux alcalino-terreux calcium, strontium et barium, et éventuellement un des activaturs terres rares terbium et dysprosium, ou les deux, le terbium et le dysprosium étant à l'état trivalent, ladite matière luminescente ayant une structure cristalline hexagonale qui correspond à celle de la $\beta$-alumine et ayant une composition représentée par:

$(1-y-\frac{z}{3})Ce_2O_3.vTb_2O_3.wDy_2O_3.aCaO.bSrO.cBaO.nAl_2O_3$

où $y = v + w$,
$z = a + b + c$,

$8 \leq n \leq 14,$

$0{,}00 \leq v \leq 0{,}25,$

$0{,}00 \leq w \leq 0{,}05,$ et

$0{,}01 \leq Z \leq 1{,}20,$

dans un mélange inorganique fusible, rendant ainsi le mélange condensé, après refroidissement, luminescent lorsqu'on l'expose à un rayonnement excitant approprié.

**Patentansprüche**

1. Leuchtstoff, der ein Aluminat mit dreiwertigem Cer und wenigstens einem der Erdalkalikationen Kalzium, Strontium und Barium und wahlweise einem oder beiden der Seltenerden-Aktivatoren Terbium und Dysprosium enthält, wobei das Terbium und Dysprosium dreiwertig vorliegen, und wobei der besagte Leuchtstoff eine hexagonale Kristallstruktur besitzt, die mit der des ß-Aluminiumoxids übereinstimmt, und durch die Zusammensetzung

$(1-y-\frac{z}{3})\, Ce_2O_3.vTb_2O_3.wDy_2O_3.aCaO.bSrO.cBaO.nAl_2O_3$

wiedergegeben wird, mit $y = v + w,$

$z = a + b + c,$

$8 \leq n \leq 14,$

$0.00 \leq v \leq 0.25,$

$0.00 \leq w \leq 0.05,$ und

$0.01 \leq z \leq 1.20.$

2. Leuchtstoff nach Anspruch 1, enthaltend Terbium und/ oder Dysprosium.

3. Leuchtstoff nach Anspruch 1 oder 2, wobei $10 \leq n \leq 13$ ist.

4. Leuchtstoff nach einem der Ansprüche 1 bis 3, wobei $c = 0$ ist.

5. Leuchtstoff nach einem der Ansprüche 1 bis 3, wobei $a = 0$ und $b = 0$ ist.

6. Leuchtstoff nach Anspruch 4, wobei $0.20 \leq z \leq 0.80$ ist.

7. Leuchtstoff nach Anspruch 5, wobei $0.10 \leq z \leq 0.40$ ist.

8. Leuchtschirm enthaltend einen Leuchtstoff, der Aluminat mit dreiwertigem Cer und wenigstens einem der Erdalikationen Kalzium, Strontium und Barium und wahlweise einem oder beiden Seltenerden-Aktivatoren Terbium und Dysprosium enthält, wobei das Terbium und das Dysprosium dreiwertig vorliegen, und wobei der besagte Leuchtstoff eine hexagonale Kristallstruktur besitzt, die mit der des β-Aluminiumoxids übereinstimmt, und durch die Zusammensetzung

$(1-y-\frac{z}{3})\, Ce_2O_3.vTb_2O_3.wDy_2O_3.aCaO.bSrO.cBaO.nAl_2O_3$

wiedergegeben wird, mit $y = v + w,$

$z = a + b + c,$

$8 \leq n \leq 14,$

$0.00 \leq v \leq 0.25,$

$0.00 \leq w \leq 0.05,$ und

$0.01 \leq z \leq 1.20.$

9. Quecksilberdampf-Niederdruck-Entladungslampe mit einem Leuchtschirm, wie in Anspruch 8 beansprucht.

10. Cadmiumdampf-Niederdruck-Entladungslampe mit einem Leuchtschirm, wie in Anspruch 8 beansprucht.

11. Verfahren umfassend das Einarbeiten eines Leuchtstoffs, der ein Aluminat mit dreiwertigem Cer und

9

wenigstens einem der Erdalkalikationen Kalzium, Strontium und Barium und wahlweise einem oder beiden der Seltenerden-Aktivatoren Terbium und Dysprosium enthält, wobei das Terbium und Dysprosium dreiwertig vorliegen, und wobei der besagte Leuchtstoff eine hexagonale Kristallstruktur besitzt, die mit der des ß-Aluminiumoxids übereinstimmt, und durch die Zusammensetzung

$$(1-y-\tfrac{z}{3})\ Ce_2O_3.vTb_2O_3.wDy_2O_3.aCaO.bSrO.cBaO.nAl_2O_3$$

wiedergegeben wird, mit $y = v+w$,
$z = a+b+c$,
$8 \leqq n \leqq 14$,
$0.00 \leqq v \leqq 0.25$,
$0.00 \leqq w \leqq 0.05$ und
$0.01 \leqq z \leqq 1.20$,

durch Backen in eine schmelzbare (sinterbare) anorganische Mischung, wodurch die geschmolzene (gesinterte) Mischung nach dem Abkühlen lumineszierend wird, wenn sie einer geeigneten anregenden Strahlung ausgesetzt wird.

FIG.1

EP 0 251 550 B1

FIG.2

EP 0 251 550 B1

FIG. 3